# EUROPEAN PATENT APPLICATION

(11) **EP 0 582 374 A2**
(43) Date of publication of application: **09.02.1994**
(21) Application number: 93304667.4
(22) Date of filing: 15.06.1993
(51) Int. Cl.: F16B 13/00, F16B 25/10, F16B 15/06

(54) **A fastener anchor**

(30) Priority: 29.06.1992 GB 9213771; 04.01.1993 GB 9300014
(71) Applicant: PLASTERMASTER (International Limited), Blackheath, London, SE3 7HU (GB)
(72) Inventor: Fowler, Peter Kelvin, Sidcup, Kent, DA15 8EY (GB); Fowler, Terence Robert, Dartford, Kent, DA2 6DG (GB); Jenman, David Geoffrey, Sidcup, Kent, DA15 9EW (GB)
(74) Representative: Jones, Graham H.

(57) **Abstract**

A fastener anchor (2) for use in locating a threaded fastener such as a screw or bolt in friable material such as plasterboard. The threaded fastener anchor (2) comprises a head (4), a body portion (6), and a pointed punch portion (12), the body portion (6) being a parallel sided body portion which is provided with an external thread (8), the pointed punch portion (12) being a non-threaded cone which is such that it is not capable of effecting a drilling action, and the pointed punch portion (12) being such as to cause a hole to be punched which is of substantially the same diameter as the root diameter of the external thread (8) on the body portion (6). The fastener anchor (2) may include a pair of slots (10) which extend longitudinally of the fastener anchor (2) and which also extend towards each other from opposite sides of the fastener anchor (2).

## Description

This invention relates to a fastener anchor.

Fastener anchors are well known and they are usually employed for enabling fixings to be made in products such as friable sheet material, lightweight blocks and hollow doors. The friable sheet material may be in the form of plasterboard used for walls, partitions or ceilings.

In one non-limiting embodiment of the present invention, there is provided a fastener anchor comprising a head, a body portion, and a pointed punch portion, the body portion being a parallel sided body portion which is provided with an external thread, the pointed punch portion being a non-threaded cone which is such that it is not capable of effecting a drilling action, and the pointed punch portion being such as to cause a hole to be punched which is substantially the same diameter as the root diameter of the external thread on the body portion.

The pointed punch portion enables the fastener anchor to be punched, pushed or wiggled into friable sheet material without the need to first drill a bore in the surface, although a hole can be made with a drill, a bradawl or manual screwdriver, if desired. Once the pointed punch portion has passed substantially into or has passed through the friable sheet material, the fastener anchor can be rotated to enable the externally threaded body portion to bite into the friable sheet material. When a threaded fastener is screwed into the fastener anchor, the slots allow the fastener anchor to expand, thereby helping to ensure that the fastener anchor remains a firm fit in the surface in which it has been located. If the fastener anchor is used on a cavity structure so that the fastener anchor protrudes through the other side of a piece of sheet material, then the slots in the fastener anchor can enable the fastener anchor to open up on the inside of the sheet material to firmly locate the fastener anchor in position. The fastener anchor can be made of a mouldable plastics material so that it can easily and cheaply be produced.

Preferably, the pointed punch portion is solid. If desired however the pointed punch portion may be hollow. With a solid pointed punch portion, a solid plug of material is provided which resists the passage of a threaded fastener through the body portion and beyond the pointed punch portion.

Advantageously, the thread on the body portion increases in a radial direction from the pointed punch portion to the head such that the thread defines the shape of a cone along the length of the thread. Such a thread formation gives a very good tight fit of the fastener anchor in the friable material. The thread on the body portion may however be the same radial size along its length if desired.

The pointed punch portion will usually be shorter than the length of the external thread of the body portion. Thus, for example, the pointed punch portion may be 14mm long, and the external thread on the body portion may be 19mm long.

The fastener anchor may include a pair of slots which extend longitudinally of the fastener anchor and which also extend toward each other from opposite sides of the fastener anchor.

The fastener anchor may be one in which the slots extend past each other, and in which the slots are offset from each other, whereby a membrane member between the slots is created. The slots may extend past each other by, for example, a distance of 3mm.

The slots may be offset from each other by, for example, a distance of 0.25mm.

The presence of the membrane member is advantageous in that it fills up the screw thread of a screw threaded fastener, for example a screw or a bolt, as the screw threaded fastener is screwed into the fastener anchor. Also, the membrane member cooperates with the offset slots to enable the screw threaded fastener easily to be screwed in a straight line along the fastener anchor.

If desired, the fastener anchor may be one in which the slots are in line with each other, and in which the slots stop short of each other.

Preferably, the fastener anchor is one in which the slots extend in a straight line and terminate at a position adjacent a tip of the pointed punch portion. In an alternative embodiment of the fastener anchor, the slots extend in a straight line and terminate at a position substantially before a tip of the pointed punch portion.

In a yet further embodiment of the fastener anchor, the fastener anchor may be one in which the slots extend in a straight line towards a tip of the pointed punch portion, but then extend to a side of the fastener anchor. The use of slots extending to a side of the fastener anchor helps threaded fasteners which are longer than the fastener anchor to break through the fastener anchor at a predetermined position.

The fastener anchor will usually be one in which the head includes a formation for enabling the fastener anchor to be screwed into a surface. The formation will usually be a recess. The recess may be a slot for receiving a blade screwdriver, or the recess may be a star-shaped recess for receiving a Phillips or a Pozidrive (trade mark) screwdriver.

Where the fastener anchor has a recess, then the recess may advantageously extend into a dimpled portion forming a lead-in for a threaded fastener. The dimpled portion allows the threaded fastener easily to get a straight start as it is screwed into the fastener anchor. By way of example, it is mentioned that the dimpled portion may be 2mm deep, although the dimpled portion may extend to any depth and extend up to the end of the slots whether or not the slots extend beyond the cylindrical body.

The head of the fastener anchor is preferably a flat head so that the head does not project substantially from a surface of a member in which the fastener anchor is located.

The body portion may be a tapering body portion or a parallel sided body portion.

As indicated above, the fastener anchor will usually be made of a plastics material. A presently preferred plastics material is 50% glass filled nylon (registered trade mark). Other types of plastics material such for example as ABS may be employed. The fastener anchor may also be made of non-plastics materials, for example non-conductive materials other than plastics materials.

The fastener anchor may be made in a two part mould. Each part of the mould may have a blade for forming one of the slots in the fastener anchor. Preferably the blades are separately formed from the remainder of the mould so that, if a blade should break, it can easily be replaced without having to replace the entire mould.

An embodiment of the invention will now be described solely by way of example and with reference to the accompanying drawings in which:

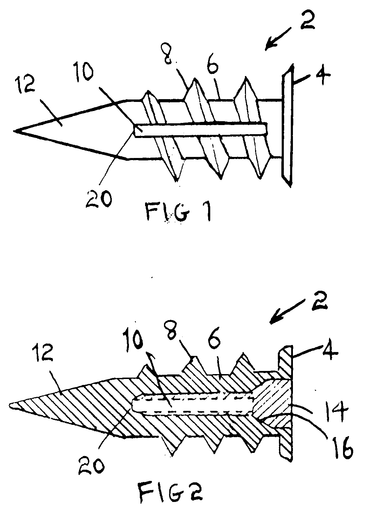

Figure 1 is a side view of a first fastener anchor; and
Figure 2 is a longitudinal section through the fastener anchor as shown in Figure 1.

Referring the the drawings, there is shown a fastener anchor 2 comprising a head 4, a body portion 6, an external thread 8 on the body portion 6, and a pair of slots 10.

The slots 10 extend longitudinally of the body portion 6. The slots 10 also extend towards each other from opposite sides of the body portion 6. The slots 10 extend past each other. The slots 10 are offset from each other whereby a membrane member (not shown) between the slots 10 is created. By way of example, it is mentioned that the slots 10 may extend past each other by a distance of 3mm and the slots 10 may be offset from each other by a distance of 0.25mm.

The fastener anchor 2 includes a non-threaded pointed punch portion 12. The pointed punch portion 12 is solid, conical and smooth-sided. Thus the pointed punch portion 12 is not capable of effecting a drilling action. The pointed punch portion 12 is 14mm long, and the external thread 8 is 19mm long.

The head 4 includes a formation in the shape of a recess 14 for receiving a screwdriver (not shown). The recess 14 is a star-shaped recess 14 for receiving a complementary shaped end of the screwdriver. The recess 14 extends into a dimpled portion 16 which is for locating a threaded fastener, for example a screw (not shown).

The head 4 is a flat head 4 so that it does not project substantially beyond the surface of friable material when the fastener anchor 2 is screwed fully home into the friable material. The friable material is preferably plasterboard but other types of friable material may receive the fastener anchor 2.

The slots 10 extend substantially from the end of the recess 14 to a position 20 which is just short, for example by 1mm, of the start of the pointed punch portion 12. Thus, the slots 10 are located only in the body portion 6 and they do not extend into the pointed punch portion 12.

The fastener anchor 2 is made of 50% glass filled with nylon. The fastener anchor 2 may be made of other plastics material if desired.

When the fastener anchor 2 is fully in position in the friable material, a threaded fastener can be screwed into the fastener anchor 2. As the threaded fastener is screwed into the fastener anchor 2, the threaded fastener destroys the membrane member, and the material of the membrane member wraps around the thread of the threaded fastener, thus helping to keep the threaded fastener a firm and positive fit in the fastener anchor 2. Also, as the threaded fastener is screwed into the fastener anchor 2, the slots 10 allow the threaded fastener to expand the body portion 6 so that the fastener anchor 2 becomes a yet tighter fit in the friable material in which it is located.

The external thread 8 is a large coarse external thread 8 which in itself gives a good grip in the friable material. Also, as can be seen from the drawings, the thread 8 on the body portion 6 increases in a radial direction from the pointed punch portion 12 to the head 4 such that the thread 8 defines the shape of a cone along the length of the thread 8. Such a thread of increasing radial diameter bites securely into the friable material as the fastener anchor 2 is screwed home into the friable material. This screwing home of the fastener anchor 2 such that the threads of the threaded portion 8 bites securely into the friable material is facilitated by the fact that the pointed punch portion 12 initially forms a hole in the friable material which is of a diameter substantially parallel to the outside diameter of the parallel sided body portion 6 or in other words of a diameter which is substantially the same as the root diameter of the threads of the external thread 8.

The fastener anchors of the present invention can easily and cheaply be formed by moulding.

It is to be appreciated that the embodiment of the invention described above with reference to the accompanying drawings has been given by way of example only and that modifications may be effected. Thus, for example, a different type of recess 16 may be employed, and the external thread, 8 on the body portion 6 may be longer or shorter than illustrated. Also, the fastener anchor of the present invention may be located in any suitable and appropriate friable or non-friable materials. Thus, for example, the fastener anchor may be located in lightweight blocks or hollow doors, with a hole being pre-drilled to receive the fastener anchor.

## Claims

1. A fastener anchor comprising a head, a body portion, a pointed punch portion, the body portion being a parallel sided body portion which is provided with an external thread, the pointed punch portion being a non-threaded cone which is such that it is not capable of effecting a drilling action, and the pointed punch portion being such as to cause a hole to be punched which is of substantially the same diameter as the root diameter of the external thread on the body portion.

2. A fastener anchor according to claim 1 in which the pointed punch portion is solid.

3. A fastener anchor according to claim 1 or claim 2 in which the thread on the body portion increases in a radial direction from the pointed punch portion to the head such that the thread defines the shape of a cone along the length of the thread.

4. A fastener anchor according to any one of the preceding claims and including a pair of slots which extend longitudinally of the fastener anchor and which also extend towards each other from opposite sides of the fastener anchor.

5. A fastener anchor according to claim 4 in which the slots are located only in the body portion and do not extend into the pointed punch portion.

6. A fastener anchor according to claim 4 or claim 5 in which the slots extend past each other, and in which the slots are offset from each other, whereby a membrane member between the slots is created.

7. A fastener anchor according to claim 4 or claim 5 in which the slots are in line with each other, and in which the slots stop short of each other.

8. A fastener anchor according to any one of claims 4 to 7 in which one slot is longer than the other slot.

9. A fastener anchor according to any one of the preceding claims in which the head includes a formation for enabling the fastener anchor to be screwed into a surface.

10. A fastener anchor according to any one of the preceding claims in which the fastener anchor is made of a plastics material.
